# FASCICULE DE BREVET EUROPEEN

(11) **EP 0 618 036 B1**
(45) Date de publication et mention de la délivrance du brevet: **03.09.1997**
(21) Numéro de dépôt: 93403135.2
(22) Date de dépôt: 22.12.1993
(51) Int. Cl.: B23K 26/00, B23K 26/18

(54) **Procédé et dispositif d'usinage par faisceau laser**
Verfahren und Vorrichtung zur Bearbeitung mit einem Laserstrahl
Process and apparatus for machining with laser beam

(30) Priorité: 30.12.1992 FR 9215885
(43) Date de publication de la demande: 05.10.1994
(73) Titulaire: SOCIETE NATIONALE D'ETUDE ET DE CONSTRUCTION DE MOTEURS D'AVIATION, "S.N.E.C.M.A.", F-75015 Paris (FR)
(72) Inventeur: Chatelain, Hervé Laurent, F-77127 Lieusaint (FR); Herren, Peter, CH-2564 Bellmund (CH); Thompson, Peter, Bilton, Rugby, CV22 7TJ (GB)
(74) Mandataire: Berrou, Paul

(56) Documents cités:
- EP-A- 0 347 053
- WO-A-89/03274
- WO-A-91/08723
- WO-A-92/16822
- GB-A- 2 236 070
- GB-A- 2 249 279

## Description

La présente invention concerne un procédé et un dispositif d'usinage par faisceau laser selon le préambule des revendications 1 et 2.

Elle s'applique notamment au perçage et au découpage de pièces mécaniques.

Lors de l'usinage, par exemple du perçage, d'une paroi d'une pièce par un faisceau laser, ce faisceau laser risque d'endommager des parois de la pièce, qui sont voisines de la paroi précédente, après avoir percé cette dernière.

On connaît déjà, par le document EP-A-0347053, une technique permettant d'empêcher le faisceau laser d'endommager les parois voisines.

Cette technique connue consiste à disposer, au voisinage de l'endroit où le faisceau laser émerge après avoir percé la paroi, un milieu thyxotropique comprenant un matériau apte à disperser le faisceau laser.

Cependant, cette technique connue présente l'inconvénient de nécessiter le nettoyage de la piéce après l'usinage de celle-ci, afin d'éliminer ce milieu thyxotropique.

La présente invention vise un procédé et un dispositif d'usinage par faisceau laser permettant de protéger les parois voisines de la paroi usinée contre les impacts du faisceau laser tout en ne présentant pas l'inconvénient mentionné plus haut.

De façon précise, la présente invention a tout d'abord pour objet un procédé d'usinage par faisceau laser, selon lequel le faisceau laser est envoyé sur une paroi d'un composant à usiner, d'un côté de cette paroi, et émerge de l'autre côté de celle-ci après l'usinage, ce procédé étant caractérisé en ce qu'un disque opaque au faisceau laser est disposé de cet autre côté de la paroi, sur le trajet suivi par le faisceau laser lorsqu'il émerge, et animé d'un mouvement de rotation, de façon à arrêter le faisceau laser émergent et à protéger ainsi les parois voisines de la paroi usinée contre les impacts de ce faisceau laser émergent.

La présente invention a également pour objet un dispositif d'usinage par faisceau laser, comprenant des moyens prévus pour créer le faisceau laser et l'envoyer sur une paroi d'un composant à usiner, d'un côté de cette paroi, le faisceau laser émergeant de l'autre côté de cette paroi après l'usinage, ce dispositif étant caractérisé en ce qu'il comprend en outre un disque opaque au faisceau laser, destiné à être disposé de cet autre côté de la paroi, sur le trajet suivi par le faisceau laser lorsqu'il émerge, et des moyens prévus pour entraîner le disque en rotation, de façon à arrêter le faisceau laser émergent et à protéger ainsi les parois voisines de la paroi usinée contre les impacts de ce faisceau laser émergent.

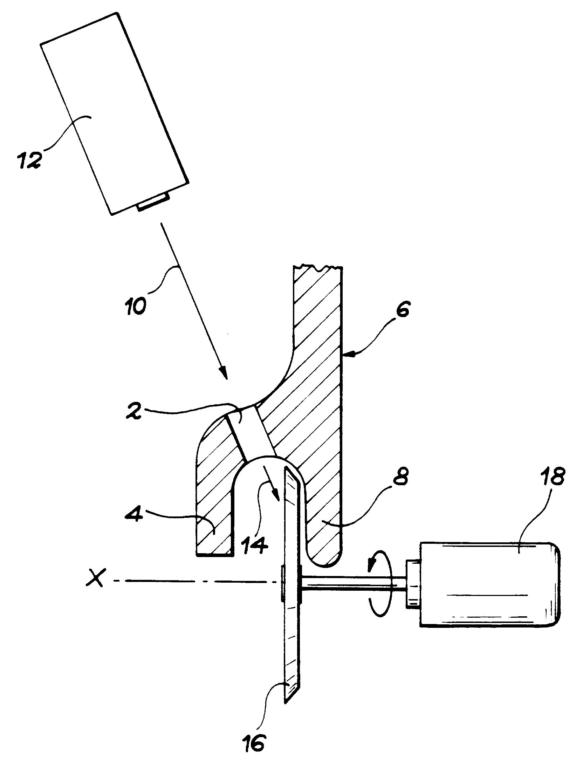

La présente invention sera mieux comprise à la lecture de la description d'exemples de réalisation donnés ci-après à titre purement indicatif et nullement limitatif, en faisant référence à la figure unique annexée qui représente de façon schématique un dispositif d'usinage conforme à l'invention.

Dans l'exemple représenté sur cette figure, le dispositif conforme à l'invention est destiné à faire un perçage 2 dans une paroi 4 d'une pièce 6 qui est maintenue par des moyens non représentés.

La pièce 6 comporte d'autres parois telles que la paroi 8, qui sont voisines de la paroi 4 dans laquelle on réalise le perçage.

Ce perçage est réalisé grâce à un faisceau laser 10 formé par des moyens connus 12 comportant un laser par exemple de type YAG.

Pour protéger la paroi voisine 8 contre un impact secondaire du faisceau laser, c'est-à-dire contre le faisceau laser 14 qui émerge de la paroi 4 lorsque le perçage 2 a été réalisé, on utilise, conformément à la présente invention, un disque 16 prévu pour arrêter le faisceau laser émergent 14.

Ce disque-protecteur 16 est animé d'un mouvement de rotation autour de son axe X grâce à un moteur 18 maintenu et commandé par des moyens non représentés.

Le disque 16, qui ne comporte pas d'ouvertures et qui est opaque au faisceau laser, est disposé, avant l'opération de perçage, entre les parois 4 et 8, au voisinage de la paroi à protéger 8, et de manière à intercepter le faisceau laser lorsque celui-ci émergera de la paroi percée 4.

La mise en rotation du disque 16 lorsque l'opération de perçage a lieu permet donc d'arrêter le faisceau lorsqu'il émerge de la paroi 4 et de répartir la puissance du faisceau laser sur une grande surface et, par conséquent, de diminuer la densité d'énergie sur le matériau constitutif du disque 16.

La nature et les dimensions de ce disque ainsi que la vitesse de rotation de ce dernier sont choisies en fonction de l'opération d'usinage à réaliser (forme de la pièce, puissance du faisceau laser nécessaire, ...).

On peut par exemple choisir le matériau constitutif du disque dans le groupe comprenant le PTFE (Polytétrafluoréthylène), l'aluminium, le cuivre, le molybdène, le carbure de tungstène, l'acier inoxydable martensitique, l'acier inoxydable austénitique, les alliages à base de nickel, les alliges à base de cobalt, le titane, cette liste n'étant pas exhaustive.

On choisit de préférence pour le disque une épaisseur supérieure ou égale à 0,4 millimètre (mais bien entendu inférieure à la distance séparant la paroi à usiner 4 de la paroi 8 que l'on veut protéger).

Suivant les conditions d'usinage et notamment suivant le diamètre du faisceau laser, on peut choisir le diamètre du disque 16 dans l'intervalle allant de 10 millimètres à 80 millimètres.

La vitesse de rotation du disque 16 est également choisie en fonction des conditions de l'opération d'usinage et en particulier en fonction de la puissance du faisceau laser et peut être choisie dans l'intervalle allant de 10 000 tours par minute à 100 000 tours par minute.

La présente invention présente divers avantages.

En particulier, elle permet d'utiliser des disques de divers matériaux et de très faible épaisseur (qui ne résisteraient pas au faisceau laser si ces disques étaient immobiles).

On peut même utiliser un disque de même nature que la pièce à usiner.

La présente invention permet aussi d'arrêter le faisceau laser dans des cavités très étroites (en adaptant les dimensions du disque à ces cavités).

Enfin, il est possible d'adapter le disque à la configuration de la pièce à usiner.

## Revendications

1. Procédé d'usinage par faisceau laser, selon lequel le faisceau laser est envoyé sur une paroi (4) d'un composant (6) à usiner, d'un côté de cette paroi, et émerge de l'autre côté de celle-ci après l'usinage, ce procédé étant caractérisé en ce qu'un disque (16) opaque au faisceau laser est disposé de cet autre côté de la paroi, sur le trajet suivi par le faisceau laser lorsqu'il émerge, et animé d'un mouvement de rotation, de façon à arrêter le faisceau laser émergent et à protéger ainsi les parois (8) voisines de la paroi usinée contre les impacts de ce faisceau laser émergent.

2. Dispositif d'usinage par faisceau laser, comprenant des moyens (12) prévus pour créer le faisceau laser et l'envoyer sur une paroi (4) d'un composant (6) à usiner, d'un côté de cette paroi, le faisceau laser émergeant de l'autre côté de cette paroi après l'usinage, ce dispositif étant caractérisé en ce qu'il comprend en outre un disque (16) opaque au faisceau laser, destiné à être disposé de cet autre côté de la paroi, sur le trajet suivi par le faisceau laser lorsqu'il émerge, et des moyens (18) prévus pour entraîner le disque en rotation, de façon à arrêter le faisceau laser émergent et à protéger ainsi les parois (8) voisines de la paroi usinée contre les impacts de ce faisceau laser émergent.

3. Dispositif selon la revendication 2, caractérisé en ce que la vitesse de rotation du disque (16) est choisie dans l'intervalle allant de 10000 tours par minute à 100000 tours par minute.

4. Dispositif selon l'une quelconque des revendications 2 et 3, caractérisé en ce que le diamètre du disque (16) est choisi dans l'intervalle allant de 10 mm à 80 mm.

5. Dispositif selon l'une quelconque des revendications 2 à 4, caractérisé en ce que l'épaisseur du disque (16) est au moins égale à 0,4 mm.

6. Dispositif selon l'une quelconque des revendications 2 à 5, caractérisé en ce que le disque (16) est fait d'un matériau choisi dans le groupe comprenant le polytétrafluoréthylène, l'aluminium, le cuivre, le molybdène, le carbure de tungstène, l'acier inoxydable martensitique, l'acier inoxydable austénitique, les alliages à base de nickel, les alliages à base de cobalt, le titane, le matériau constitutif du composant (6) à usiner.

## Claims

1. A process for laser beam machining wherein the laser beam is transmitted towards one side of a wall (4) of an article (6) to be machined and issues from the other side of the wall after machining, characterised in that a disc (16) which is opaque to the laser beam is disposed on said other side of the wall in the path of the issuing laser beam and is rotated so as to stop the issuing laser beam and thus protect the walls (8) adjacent the machined wall from impingement by the issuing laser beam.

2. A laser beam machining device comprising means (12) for producing the laser beam and transmitting it towards one side of a wall (4) of an article (6) to be machined, the laser beam issuing from the other side of the wall after machining, characterised in that it also comprises a disc (16) which is opaque to the laser beam and which is adapted to be disposed on said other side of the wall in the path of the issuing laser beam, and means (18) for rotating the disc so as to stop the issuing laser beam and thus protect the walls (8) adjacent the machined wall from impingement by the issuing laser beam.

3. A device according to claim 2, characterised in that the speed of rotation of the disc (16) is chosen in the range of from 10 000 to 100 000 revolutions per minute.

4. A device according to any of claims 2 and 3, characterised in that the diameter of the disc (16) is chosen in the range of from 10 to 80 mm.

5. A device according to any of claims 2 to 4, characterised in that the thickness of the disc (16) is at least 0.4 mm.

6. A device according to any of claims 2 to 5, characterised in that the disc (16) is made of a material chosen from the group comprising polytetrafluoroethylene, aluminium, copper, molybdenum, tungsten carbide, martensitic stainless steel, austenitic stainless steel, nickel-based alloys, cobalt-based alloys, titanium or the constituent material of the article (6) to be machined.

## Patentansprüche

1. Verfahren zur Laserstrahl-Bearbeitung, bei dem der Laserstrahl auf eine Wand (4) aus einer zu bearbeitenden Zusammensetzung (6) von einer Seite dieser Wand her gestrahlt wird und auf der anderen Seite von dieser nach der Bearbeitung austritt, wobei das Verfahren **dadurch gekennzeichnet** ist, daß eine für den Laserstrahl undurchlässige Scheibe (16 )auf dieser anderen Seite der Wand in dem Weg angeordnet ist, dem der Laserstrahl beim Austritt folgt, und die in Drehung versetzt wird, so daß sie den austretenden Laserstrahl unterbricht und somit die benachbarten Wände (8) der zu bearbeitenden Wand gegen die Einwirkungen des austretenden Laserstrahls schützt.

2. Laserstrahl-Bearbeitungsvorrichtung mit Mitteln (12) zur Erzeugung und zum Ausstrahlen eines Laserstrahls auf eine Wand (4) aus einer zu bearbeitenden Zusammensetzung (6) von einer Seite dieser Wand her, wobei der Laserstrahl nach der Bearbeitung an der anderen Seite dieser Wand austritt, wobei die Vorrichtung **dadurch gekennzeichnet** ist, daß sie weiterhin eine für den Laserstrahl undurchlässige Scheibe (16) aufweist, die an der anderen Seite dieser Wand in dem Weg angeordnet werden kann, dem der Laserstrahl bei seinem Austritt folgt, und Mittel (18), um die Scheibe in Drehung zu versetzen, so daß sie den austretenden Laserstrahl unterbricht und somit die der bearbeiteten Wand benachbarten Wände (8) gegen die Einwirkungen des austretenden Laserstrahls schützt.

3. Vorrichtung nach Anspruch 2,
**dadurch gekennzeichnet**, daß die Drehgeschwindigkeit der Scheibe (16) aus dem Bereich zwischen 10.000 Umdrehungen pro Minute und 100.000 Umdrehungen pro Minute gewählt ist.

4. Vorrichtung nach einem der Ansprüche 2 und 3,
**dadurch gekennzeichnet**, daß der Durchmesser der Scheibe (16) aus dem Bereich zwischen 10 mm und 80 mm gewählt ist.

5. Vorrichtung nach einem der Ansprüche 2 bis 4,
**dadurch gekennzeichnet**, daß die Dicke der Scheibe (16) wenigstens 0,4 mm beträgt.

6. Vorrichtung nach einem der Ansprüche 2 bis 5,
**dadurch gekennzeichnet**, daß die Scheibe (16) aus Polytetrafluorethylen, Aluminium, Kupfer, Molybden, Wolframcarbid, martensitischem Inoxstahl, austenitischem Inoxstahl, Nickellegierungen, Kobaltlegierungen, Titan oder dem Material der zu bearbeitenden Zusammensetzung (6) gewählt ist.
